# EUROPEAN PATENT SPECIFICATION

(11) **EP 3 205 735 B1**
(45) Date of publication and mention of the grant of the patent: **24.07.2019**
(21) Application number: 17153902.6
(22) Date of filing: 31.01.2017
(51) Int. Cl.: C22C 21/10, C22C 21/12, C22C 21/14, C22C 21/16, C22C 21/18

(54) **AL-MG-ZN ALLOY WITH SCANDIUM FOR THE INTEGRAL CONSTRUCTION OF ALM STRUCTURES**
AL-MG-ZN-LEGIERUNG FÜR DEN INTEGRALEN AUFBAU VON ALM-STRUKTUREN
ALLIAGE AL-MG-ZN AU SCANDIUM POUR LA CONSTRUCTION D'UN SEUL TENANT DE STRUCTURES ALM

(30) Priority: 11.02.2016 DE 102016001500
(43) Date of publication of application: 16.08.2017
(73) Proprietor: Airbus Defence and Space GmbH, 82024 Taufkirchen (DE)
(72) Inventor: LENCZOWSKI, Blanka, 85579 Neubiberg (DE)
(74) Representative: LKGLOBAL Lorenz & Kopf PartG mbB Patentanwälte

(56) References cited:
- EP-A1- 2 288 738
- US-A1- 2005 034 794
- US-A1- 2005 058 568
- US-A1- 2014 224 386
- A.F Norman ET AL: "Examination of the effect of Sc on 2000 and 7000 series aluminium alloy castings: for improvements in fusion welding", Materials Science and Engineering: A, vol. 354, no. 1-2, 1 August 2003 (2003-08-01), pages 188-198, XP055470926, AMSTERDAM, NL ISSN: 0921-5093, DOI: 10.1016/S0921-5093(02)00942-5
- C Suarez ET AL: "Light Metals 2012", Light Metals 2012, 11 May 2012 (2012-05-11), XP055470927, Hoboken, NJ, USA ISBN: 978-1-118-29139-9 Retrieved from the Internet: URL:http://www.dunand.northwestern.edu/ref s/files/JOM-0302-35.pdf
- P E Bretz ET AL: "Effect of Microstructure on 7XXX Aluminum Alloy Fatigue Crack Growth Behavior Down to Near-Threshold Rates", , 30 October 1981 (1981-10-30), XP055470930, Retrieved from the Internet: URL:http://www.dtic.mil/dtic/tr/fulltext/u 2/a422908.pdf
- He Yongdong ET AL: "Effect of minor Sc and Zr addition on grain refi nement of as-cast Al-Zn-Mg-Cu alloys", China Foundry, 1 August 2009 (2009-08-01), pages 214-218, XP055470934, Retrieved from the Internet: URL:http://www.foundryworld.com/uploadfile /200912130592779.pdf
- P K Mandal: "An Experimental Study on Thermal Stability of Age-Hardenable Aluminium Alloys Modified by Scandium Inoculation", Materials Science Forum, 1 September 2015 (2015-09-01), pages 387-22, XP055470945, Pfaffikon DOI: 10.4028/www.scientific.net/MSF.830-831.387 Retrieved from the Internet: URL:http://www.ijerd.com/paper/vol12-issue 2/Version-1/C1221619.pdf

## Description

The present invention relates to an aluminum alloy, a method for producing a lightweight metal workpiece, a lightweight metal workpiece comprising the aluminum alloy, and also the use of the aluminum alloy to produce high-strength lightweight metal workpieces by means of additive layer manufacturing (ALM) and/or spraying methods for load optimized components especially in automobile manufacturing or in aviation and aerospace applications, plant engineering, medical technology, or as coating material for structural components.

### BACKGROUND OF THE INVENTION

Within the scope of ALM technology, there are different production methods, such as powder bed methods, powder jet methods, or wire-based processes. For heavily loaded structures/structural components, process technologies of this type provide a load-optimised component part construction with versatile individual design possibilities, for example by integrated and integral material construction from different or also "alloy-related" materials. The generative methods support maximum utilisation of materials alongside component part complexity, depending on the manufacturing method. Here, what is made possible *inter alia* is customised manufacture of near-end-contour structural components with potentially also local material adaptation/change/reinforcement integrated directly in the process, with integration of a number of, or at least two material powder containers or material wire guides.

ALM processes, particularly in air travel, constitute technological competition for precision casting techniques, which are used primarily for producing complex structural components for aviation or medical technology, which structural components are then thin-walled and load-optimised depending on the alloy. Also the small quantity of the required structural components is of great importance. In the case of precision casting the aluminum alloy A357(AlSi7Mg0.6) is primarily used for thin-walled structures, and A201/KO1 (AlCu5MgTiAg) is primarily used as a firmer variant for structural components having greater wall thicknesses. Standard materials are primarily used for ALM processes. In the case of titanium alloys the material is especially Ti6Al4V, and in the case of aluminum alloys it is AlSi10Mg. The nowadays required strength values are considerably above 400 MPa and are often only achievable with wrought alloys which, however, are not or only difficult to cast with common casting methods. The US patent application US 2005/0058568 concerns the production of aerospace components made from Al-Zn-Mg-Cu alloys that exhibit an improved compromise between static mechanical characteristics and damage tolerance.

However, in order to be able to utilise the advantages of ALM process technology to the full extent depending on the application of the structural components, it is necessary to design process-optimised materials.

It is therefore desirable to provide an aluminum alloy. It is also desirable to provide an aluminum alloy which can be integrated directly in the production process in local or integral component part manufacture. It is additionally desirable to provide an aluminum alloy by means of which complex thermo-mechanical treatment can be avoided and therefore further costly and time-consuming process steps can be saved. It is also desirable to provide an aluminum alloy which enables a heat treatment without material damage and/or thermal stresses/warping. In addition, it is desirable to provide an aluminum alloy with which it is possible to dispense with complex component part levelling and with which the component part reproducibility and economic efficiency can also be increased. In particular, it is therefore desirable to provide an aluminum alloy which is suitable for producing lightweight metal workpieces, in particular by ALM process technologies and/or spraying methods.

One object of the present invention is therefore to provide an aluminum alloy, in particular an aluminum alloy which is suitable for producing high-strength lightweight metal workpieces. A further object of the present invention is to enable the aluminum alloy to be directly integrated in the production process in local or integral component part manufacture. A further object of the present invention is to avoid complex thermo-mechanical treatment (as for instance by rolling, extrusion and forging) and therefore further costly and time-consuming process steps can be saved by means of the aluminum alloy. A further object of the present invention is to allow the aluminum alloy to undergo a heat treatment without material damage and/or thermal stresses/warping. A further object of the present invention is to dispense with complex component part levelling and to also be able to increase the component part reproducibility and economic efficiency on account of the use of the aluminum alloy. A further object of the present invention is to make the aluminum alloy suitable for producing high-strength lightweight metal workpieces, in particular by ALM process technologies and/or spraying methods.

These objects are achieved by the subject-matter defined in the claims. Advantageous embodiments are subject of dependent claims.

### SUMMARY OF THE INVENTION

Accordingly, a first subject of the present invention is an aluminum alloy consisting of
4.0 to 10.0 % by weight, in relation to the total weight of the alloy, of zinc (Zn),
1.0 to 3.5 % by weight, in relation to the total weight of the alloy, of magnesium (Mg), 0.001 to 0.5 % by weight, in relation to the total weight of the alloy, of at least one element selected from the group consisting of zirconium (Zr), hafnium (Hf), molybdenum (Mo), terbium (Tb), niobium (Nb), gadolinium (Gd), erbium (Er), and vanadium (V),
0 to < 2.5 % by weight, in relation to the total weight of the alloy, of copper (Cu),
0 to < 0.4 % by weight, in relation to the total weight of the alloy, of silicon (Si),
0 to < 0.5 % by weight, in relation to the total weight of the alloy, of iron (Fe),
0 to 0.5 % by weight, in relation to the total weight of the alloy, of manganese (Mn),
0 to 0.3 % by weight, in relation to the total weight of the alloy, of chromium (Cr),
0 to 0.2 % by weight, in relation to the total weight of the alloy, of titanium (Ti), 0.02 to 1.25 % by weight, in relation to the total weight of the alloy, of scandium (Sc),
the rest being aluminum with further impurities individually of at most 0.1 % by weight in relation to the total weight of the alloy, and on the whole at most 0.5 % by weight, in relation to the total weight of the alloy, wherein if the aluminium alloy contains Zr (Zr), the amount of zirconium corresponds to at most 1/4 of the amount of scandium (Sc).

The aluminum alloy according to the invention is in particular thermally stable. A further advantage is that the aluminum alloy according to the invention can be integrated directly in the production process in local or integral component part manufacture. A further advantage is that complex thermo-mechanical treatment can be avoided and therefore further costly and time-consuming process steps can be saved by means of the aluminum alloy according to the invention. A further advantage is the fact that the aluminum alloy according to the invention enables a heat treatment without material damage and/or thermal stresses/warping. A further advantage is that it is possible to dispense with complex component part levelling and to also increase the component part reproducibility and economic efficiency on account of the use of the aluminum alloy according to the invention. A further advantage is in particular the fact that the aluminum alloy according to the invention is suitable for producing high-strength lightweight metal workpieces, in particular by ALM process technologies and/or spraying methods.

By way of example, the alloy contains 4.0 to 8.0 % by weight, in particular 4.1 to 8.0 % by weight, in relation to the total weight of the alloy, of zinc (Zn) and/or 1.1 to 3.0 % by weight, in relation to the total weight of the alloy, of magnesium (Mg).

By way of example, the alloy contains 0.01 to 0.2 % by weight, in particular 0.03 to 0.15 % by weight, in relation to the total weight of the alloy, of titanium (Ti) and/or 0.02 to 0.75 % by weight, in particular 0.05 to 0.7 % by weight in relation to the total weight of the alloy, of scandium (Sc).

By way of example, the alloy contains 0.01 to 2.0 % by weight, in particular 0.05 to 1.5 % by weight, in relation to the total weight of the alloy, of copper (Cu) and/or 0.01 to 0.5 % by weight, in particular 0.05 to 0.4 % by weight, in relation to the total weight of the alloy, of manganese (Mn), and/or 0.01 to 0.2 % by weight, in particular 0.02 to 0.15 % by weight, in relation to the total weight of the alloy, of chromium (Cr).

By way of example, the alloy contains magnesium (Mg) in an amount such that the ratio by weight of zinc (Zn) to Magnesium (Mg) [wt(Zn)/wt(Mg)] is from 2:1 to 3:1.

The alloy contains 0.001 to 0.5 % by weight, in relation to the total weight of the alloy, of at least one element selected from the group consisting of zirconium (Zr), hafnium (Hf), molybdenum (Mo), terbium (Tb), niobium (Nb), gadolinium (Gd), erbium (Er), and vanadium (V).

By way of example, the amount of hafnium (Hf) and/or terbium (Tb) corresponds individually to at most ¼ of the amount of scandium (Sc).

By way of example, the alloy is provided in the form of a powder, in particular in the form of a powder comprising particles having an average particle size *d₅₀* of ≤100 µm, preferably 20 to 70 µm.

The present invention also provides a method for producing a lightweight metal workpiece, said method comprising the following steps
a) providing an aluminum alloy as defined herein,
b) producing a lightweight metal workpiece comprising the aluminum alloy from step a) by means of additive layer manufacturing (ALM) and/or spraying methods, and
c) cooling the lightweight metal workpiece obtained in step b) to ≤80 °C with a solidification rate that is ≤10,000,000 K/sec.

By way of example, the method comprises a further step d) of subjecting the lightweight metal workpiece from step c) to a heat treatment in a temperature range of from 80 to 500 °C.

The present invention also relates to a lightweight metal workpiece comprising the aluminum alloy as defined herein.

The present invention also relates to the use of the aluminum alloy as defined herein for producing high-strength lightweight metal workpieces by means of additive layer manufacturing (ALM) and/or spraying methods. The present invention additionally relates to the use of the aluminum alloy, as defined herein, for structural components, in particular in automobile manufacturing or in aviation and aerospace applications, plant engineering, medical technology, or as coating material for structural components.

### DETAILED DESCRIPTION OF THE INVENTION

The present invention relates to an aluminum alloy.

The aluminum alloy consists of
4.0 to 10.0 % by weight, in relation to the total weight of the alloy, of zinc (Zn),
1.0 to 3.5 % by weight, in relation to the total weight of the alloy, of magnesium (Mg), 0.001 to 0.5 % by weight, in relation to the total weight of the alloy, of at least one element selected from the group consisting of zirconium (Zr), hafnium (Hf), molybdenum (Mo), terbium (Tb), niobium (Nb), gadolinium (Gd), erbium (Er), and vanadium (V),
0 to < 2.5 % by weight, in relation to the total weight of the alloy, of copper (Cu),
0 to < 0.4 % by weight, in relation to the total weight of the alloy, of silicon (Si),
0 to < 0.5 % by weight, in relation to the total weight of the alloy, of iron (Fe),
0 to 0.5 % by weight, in relation to the total weight of the alloy, of manganese (Mn),
0 to 0.3 % by weight, in relation to the total weight of the alloy, of chromium (Cr),
0 to 0.2 % by weight, in relation to the total weight of the alloy, of titanium (Ti),
0.02 to 1.25 % by weight, in relation to the total weight of the alloy, of scandium (Sc),
the rest being aluminum with further impurities individually of at most 0.1 % by weight in relation to the total weight of the alloy, and on the whole at most 0.5 % by weight, in relation to the total weight of the lloy, wherein if the aluminium alloy contains zirconium (Zr), the amount of zirconium (Zr) corresponds to at most 1/4 of the amount of scandium (Sc). The aluminum alloy should in particular be suitable for producing high-strength lightweight metal workpieces, by ALM process technologies and/or spraying methods.

One requirement of the present invention is therefore that the aluminum alloy contains zinc (Zn) in an amount of from 4.0 to 10.0 % by weight, in relation to the total weight of the alloy. The aluminum alloy preferably contains zinc (Zn) in an amount of from 4.0 to 8.0 % by weight, in particular from 4.1 to 8.0 % by weight, in relation to the total weight of the alloy.

A further requirement of the present invention is that the aluminum alloy contains magnesium (Mg) in an amount of from 1.0 to 3.5 % by weight, in relation to the total weight of the alloy. The aluminum alloy preferably contains magnesium (Mg) in an amount of from 1.1 to 3.0 % by weight, in relation to the total weight of the alloy.

By way of example, the aluminum alloy contains zinc (Zn) in an amount of from 4.0 to 10.0 % by weight and magnesium (Mg) in an amount of from 1.0 to 3.5 % by weight, in relation to the total weight of the alloy. The aluminum alloy preferably contains zinc (Zn) in an amount of from 4.0 to 8.0 % by weight and magnesium (Mg) in an amount of from 1.1 to 3.0 % by weight, in relation to the total weight of the alloy. The aluminum alloy even more preferably contains zinc (Zn) in an amount of from 4.1 to 8.0 % by weight and magnesium (Mg) in an amount of from 1.1 to 3.0 % by weight, in relation to the total weight of the alloy.

One advantage of the present invention is that the aluminum alloy contains high amounts of zinc (Zn) in comparison to magnesium (Mg), and in particular the zinc amounts are higher than in conventional aluminum alloys.

The alloy contains zinc (Zn) and magnesium (Mg) preferably in an amount such that the ratio by weight of zinc (Zn) to Magnesium (Mg) [wt(Zn)/wt(Mg)] is from 2:1 to 3:1. This ratio by weight of zinc (Zn) to Magnesium (Mg) is in particular advantageous for improving the corrosion resistance.

The aluminum alloy can further contain various additional alloy elements.

In addition, at least one element selected from the group consisting of zirconium (Zr), hafnium (Hf), molybdenum (Mo), terbium (Tb), niobium (Nb), gadolinium (Gd), erbium (Er), and vanadium (V) can be added to the aluminum alloy.

The aluminum alloy contains 0.001 to 0.5 % by weight, in relation to the total weight of the alloy, of at least one element selected from the group consisting of zirconium (Zr), hafnium (Hf), molybdenum (Mo), terbium (Tb), niobium (Nb), gadolinium (Gd), erbium (Er), and vanadium (V). By way of example, the aluminum alloy contains 0.001 to 0.5 % by weight, in relation to the total weight of the alloy, of at least one element selected from the group consisting of zirconium (Zr), hafnium (Hf), terbium (Tb), and vanadium (V).

In one embodiment, the aluminum alloy contains 0.001 to 0.5 % by weight, in relation to the total weight of the alloy, of zirconium (Zr) and/or vanadium (V). By way of example, the aluminum alloy contains 0.001 to 0.5 % by weight, in relation to the total weight of the alloy, of zirconium (Zr) and vanadium (V). Alternatively, the aluminum alloy contains 0.001 to 0.5 % by weight, in relation to the total weight of the alloy, of zirconium (Zr) or vanadium (V).

By way of example, the aluminum alloy contains at least two elements, in particular two elements, selected from the group consisting of zirconium (Zr), hafnium (Hf), molybdenum (Mo), terbium (Tb), niobium (Nb), gadolinium (Gd), erbium (Er), and vanadium (V) individually in an amount of 0.001 to 0.5 % by weight, in relation to the total weight of the alloy. Alternatively, the aluminum alloy contains at least three elements, in particular three or four elements, selected from the group consisting of zirconium (Zr), hafnium (Hf), molybdenum (Mo), terbium (Tb), niobium (Nb), gadolinium (Gd), erbium (Er), and vanadium (V) individually in an amount of 0.001 to 0.5 % by weight, in relation to the total weight of the alloy.

If the aluminum alloy contains zirconium (Zr) the amount of zirconium (Zr) corresponds to at most ¼ of the amount of scandium (Sc). In other words, the aluminum alloy contains zirconium (Zr) in an amount that corresponds to ≤25 % of the amount of scandium (Sc). By way of example, the aluminum alloy contains zirconium (Zr) in an amount that corresponds to <25 % of the amount of scandium (Sc).

Preferably, the aluminum alloy contains zirconium (Zr), by way of example in an amount of from 0.01 to 0.375 % by weight, in relation to the total weight of the alloy. Preferably, the aluminum alloy contains zirconium (Zr) in an amount of from 0.02 to 0.35 % by weight, in particular 0.05 to 0.3 % by weight, in relation to the total weight of the alloy.

In an alternative embodiment, the aluminum alloy contains 0 to 0.5 % by weight, in relation to the total weight of the alloy, of hafnium (Hf) and/or terbium (Tb). In one embodiment the aluminum alloy contains 0.001 to 0.5 % by weight (in total), in relation to the total weight of the alloy, of hafnium (Hf) and terbium (Tb). Alternatively, the aluminum alloy contains 0.001 to 0.5 % by weight, in relation to the total weight of the alloy, of hafnium (Hf) or terbium (Tb).

If the aluminum alloy contains hafnium (Hf) and/or terbium (Tb), the amount of hafnium (Hf) and/or terbium (Tb) corresponds individually to at most ¼ of the amount of scandium (Sc). In other words, the aluminum alloy contains hafnium (Hf) and/or terbium (Tb) individually in an amount that corresponds to ≤25 % of the amount of scandium (Sc). By way of example, the aluminum alloy contains hafnium (Hf) and/or terbium (Tb) individually in an amount that corresponds to <25 % of the amount of scandium (Sc).

The aluminum alloy contains 0.001 to 0.5 % by weight of zirconium (Zr) or 0.001 to 0.5 % by weight of vanadium (V) or 0.001 to 0.5 % by weight of gadolinium (Gd) or 0.001 to 0.5 % by weight of hafnium (Hf) or 0.001 to 0.5 % by weight of molybdenum (Mo) or 0.001 to 0.5 % by weight of terbium (Tb) or 0.001 to 0.5 % by weight of niobium (Nb) or 0.001 to 0.5 % by weight of erbium (Er). Alternatively, the aluminum alloy contains 0.001 to 0.5 % by weight of zirconium (Zr) and 0.001 to 0.5 % by weight of vanadium (V) and 0.001 to 0.5 % by weight of gadolinium (Gd) and 0.001 to 0.5 % by weight of hafnium (Hf) and 0.001 to 0.5 % by weight of molybdenum (Mo) and 0.001 to 0.05 % by weight of terbium (Tb) and 0.001 to 0.5 % by weight of niobium (Nb) and 0.001 to 0.5 % by weight of erbium (Er). The values in % by weight relate in each case to the total weight of the alloy.

The aluminum alloy contains titanium (Ti) in an amount of from 0 to 0.2 % by weight, in relation to the total weight of the alloy. The aluminum alloy preferably contains titanium (Ti) in an amount of from 0.01 to 0.2 % by weight, in particular 0.03 to 0.15 % by weight, in relation to the total weight of the alloy. In particular, titanium reduces the electrical conductivity.

The aluminum alloy also contains scandium (Sc) in an amount of from 0.02 to 1.25 % by weight, in relation to the total weight of the alloy. The aluminum alloy preferably contains scandium (Sc) in an amount of from 0.02 to 0.75 % by weight, in particular 0.05 to 0.7 % by weight, in relation to the total weight of the alloy.

The aluminum alloy also contains copper (Cu) in an amount of from 0 to < 2.5 % by weight, in relation to the total weight of the alloy. The aluminum alloy preferably contains copper (Cu) in an amount of from 0.01 to 2.0 % by weight, in particular 0.05 to 1.5 % by weight, in relation to the total weight of the alloy.

The aluminum alloy also contains manganese (Mn) in an amount of from 0 to 0.5 % by weight, in relation to the total weight of the alloy. The aluminum alloy preferably contains manganese (Mn) in an amount of from 0.01 to 0.5 % by weight, in particular 0.05 to 0.4 % by weight, in relation to the total weight of the alloy.

The aluminum alloy also contains iron (Fe) in an amount of from 0 to < 0.5 % by weight, in relation to the total weight of the alloy. The aluminum alloy preferably contains iron (Fe) in an amount of from 0.05 to 0.4 % by weight, in particular 0.05 to 0.2 % by weight, in relation to the total weight of the alloy.

The aluminum alloy also contains chromium (Cr) in an amount of from 0 to 0.3 % by weight, in relation to the total weight of the alloy. The aluminum alloy preferably contains chromium (Cr) in an amount of from 0.01 to 0.2 % by weight, in particular 0.02 to 0.15 % by weight, in relation to the total weight of the alloy.

The aluminum alloy also contains silicon (Si) in an amount of from 0 to < 0.4 % by weight, in relation to the total weight of the alloy. The aluminum alloy preferably contains silicon (Si) in an amount of from 0.01 to 0.2 % by weight, in particular 0.05 to 0.15 % by weight, in relation to the total weight of the alloy.

In one embodiment the aluminum alloy preferably contains iron (Fe) in an amount of from 0.05 to 0.4 % by weight, preferably 0.05 to 0.2 % by weight, in relation to the total weight of the alloy, and silicon (Si) in an amount of from 0.01 to 0.2 % by weight, in particular 0.05 to 0.15 % by weight, in relation to the total weight of the alloy. The rest of the aluminum alloy is aluminum. The aluminum alloy can also contain impurities, individually of at most 0.1 % by weight in relation to the total weight of the alloy, and on the whole at most 0.5 % by weight, in relation to the total weight of the alloy.

The aluminum alloy therefore preferably consists of
4.0 to 8.0 % by weight, preferably 4.1 to 8.0 % by weight, in relation to the total weight of the alloy, of zinc (Zn), 1.1 to 3.0 % by weight, in relation to the total weight of the alloy, of magnesium (Mg), 0.001 to 0.5 % by weight, in relation to the total weight of the alloy, of at least one element selected from the group consisting of zirconium (Zr), hafnium (Hf), molybdenum (Mo), terbium (Tb), niobium (Nb), gadolinium (Gd), erbium (Er), and vanadium (V),
0 to < 2.5 % by weight, in relation to the total weight of the alloy, of copper (Cu),
0 to < 0.4 % by weight, in relation to the total weight of the alloy, of silicon (Si),
0 to < 0.5 % by weight, in relation to the total weight of the alloy, of iron (Fe),
0 to 0.5 % by weight, in relation to the total weight of the alloy, of manganese (Mn),
0 to 0.3 % by weight, in relation to the total weight of the alloy, of chromium (Cr),
0 to 0.2 % by weight, in relation to the total weight of the alloy, of titanium (Ti),
0.02 to 1.25 % by weight, in relation to the total weight of the alloy, of scandium (Sc),
the rest being aluminum with further impurities individually of at most 0.1 % by weight in relation to the total weight of the alloy, and on the whole at most 0.5 % by weight, in relation to the total weight of the alloy, wherein if the aluminium alloy contains zirconium (Zr), the amount of zirconium (Zr) corresponds to at most 1/4 of the amount of scandium (Sc).

The aluminum alloy therefore preferably consists of
4.0 to 8.0 % by weight, preferably 4.1 to 8.0 % by weight, in relation to the total weight of the alloy, of zinc (Zn), 1.1 to 3.0 % by weight, in relation to the total weight of the alloy, of magnesium (Mg),
0 to 0.5 % by weight, in relation to the total weight of the alloy, of at least one element selected from the group consisting of zirconium (Zr), hafnium (Hf), molybdenum (Mo), terbium (Tb), niobium (Nb), gadolinium (Gd), erbium (Er), and vanadium (V),
0 to < 2.5 % by weight, in relation to the total weight of the alloy, of copper (Cu),
0.01 to 0.2 % by weight, in relation to the total weight of the alloy, of silicon (Si),
0.05 to 0.4 % by weight, in relation to the total weight of the alloy, of iron (Fe),
0 to 0.5 % by weight, in relation to the total weight of the alloy, of manganese(Mn),
0 to 0.3 % by weight, in relation to the total weight of the alloy, of chromium (Cr),
0 to 0.2 % by weight, in relation to the total weight of the alloy, of titanium (Ti),
0 to 1.25 % by weight, in relation to the total weight of the alloy, of scandium (Sc),
the rest being aluminum with further impurities individually of at most 0.1 % by weight in relation to the total weight of the alloy, and on the whole at most 0.5 % by weight, in relation to the total weight of the alloy.

The aluminum alloy can be provided in the form of a powder or wire. Methods for producing alloys in the form of a powder or wire are known in the prior art.

The aluminum alloy according to the invention is suitable in particular for producing lightweight metal workpieces, in particular high-strength lightweight metal workpieces, by ALM process technologies and/or spraying methods. The aluminum alloy according to the invention is therefore preferably provided in the form of a powder, wire or filler material.

By way of example, the aluminum alloy is provided in the form of a powder comprising particles having an average particle size *d₅₀* of ≤100 µm, preferably 10 to 70 µm.

In one embodiment, the aluminum alloy is provided in the form of a powder comprising particles having an average particle size *d₅₀* of from 20 to 70 µm, preferably from 20 µm to 60 pm. Alternatively, the aluminum alloy is provided in the form of a wire having an average wire diameter of from 0.8 mm to 5 mm, preferably from 0.8 mm to 1.2 mm.

The aluminum alloy is preferably used as a powder when the aluminum alloy is to be processed by means of spraying methods. Spraying methods are known in the prior art. By way of example, the lightweight metal workpiece can be produced via cold gas, atmospheric plasma, HVOF or flame spraying. The average particle size d₅₀ of the powder is preferably ≤ 100 µm, even more preferably from 50 to 90 µm, when the lightweight metal workpiece is produced via atmospheric plasma, HVOF or flame spraying. If the lightweight metal workpiece is produced via cold gas, the powder has an average particle size d₅₀ of from 5 to 70 µm, preferably 5 to 60 µm.

The aluminum alloy according to the invention is therefore also suitable for producing high-strength lightweight metal workpieces by spraying methods. The aluminum alloy according to the invention is preferably provided in the form of a powder or wire.

In one embodiment a wire or a filler material is firstly produced from the powder of the aluminum alloy. Such production methods are known in the prior art.

The present invention also relates to a method for producing a lightweight metal workpiece, in particular a high-strength lightweight metal workpiece, by means of additive layer manufacturing (ALM). The lightweight metal workpiece is preferably produced by a method as described hereinafter.

The method according to the invention for producing the lightweight metal workpiece, in particular the high-strength lightweight metal workpiece, comprises at least the following steps
a) providing an aluminum alloy,
b) producing a lightweight metal workpiece comprising the aluminum alloy from step a) by means of additive layer manufacturing (ALM), and
c) cooling the lightweight metal workpiece obtained in step b) to ≤80 °C with a solidification rate that is ≤10,000,000 K/sec.

By way of example, the method for producing the lightweight metal workpiece, in particular the high-strength lightweight metal workpiece, comprises a further step d) of subjecting the lightweight metal workpiece from step c) to a heat treatment in a temperature range of from 80 to 500 °C.

In one embodiment the method for producing the lightweight metal workpiece, in particular the high-strength lightweight metal workpiece, consists of the following steps:
a) providing an aluminum alloy,
b) producing a lightweight metal workpiece comprising the aluminum alloy from step a) by means of additive layer manufacturing (ALM),
c) cooling the lightweight metal workpiece obtained in step b) to ≤80 °C with a solidification rate that is ≤10,000,000 K/sec, and
d) optionally subjecting the lightweight metal workpiece from step c) to a heat treatment in a temperature range of from 80 to 500 °C.

According to step a), one requirement of the method according to the invention is therefore that an aluminum alloy is provided.

With regard to the aluminum alloys, reference is made to the above definitions in respect of the aluminum alloy and embodiments thereof.

According to step b) of the method according to the invention, a lightweight metal workpiece comprising the aluminum alloy is produced by means of additive layer manufacturing (ALM).

Methods for producing lightweight metal workpieces by means of additive layer manufacturing (ALM) are known in the prior art.

According to step c) of the method according to the invention, the lightweight metal workpiece obtained in step b) is cooled to ≤80 °C with a solidification rate that is ≤10,000,000 K/sec.

By way of example, the cooling in step c) is performed to ≤60 °C, preferably to room temperature.

It is known to a person skilled in the art that the solidification rate should be adapted to the diameter of the produced lightweight metal component part/workpiece and is dependent on the heat dissipation of the produced lightweight metal workpiece. A person skilled in the art will therefore adapt the solidification rate to the produced lightweight metal workpiece accordingly, insofar as possible. In one embodiment of the present invention, the cooling in step c) is performed with a solidification rate which is 1,000 to 10,000,000 K/sec, and preferably 5,000 to 100,000 K/sec. By way of example, the cooling in step c) is performed with a solidification step which is 10,000 to 100,000 K/sec, preferably 25,000 to 100,000 K/sec, most preferably 50,000 to 100,000 K/sec. Such a solidification rate in particular has the advantage that higher amounts of scandium can be added to the aluminum alloy.

Such methods for cooling lightweight metal workpieces are known in the prior art. By way of example, the lightweight metal workpiece can be cooled in a defined manner with the aid of cooling in moving air or by quenching in water. Alternatively, the cooling in step c) is performed in the open air.

In an optional step d) of the method according to the invention, the lightweight metal workpiece obtained in step c) can be subjected to a heat treatment in a temperature range of from 80 to 500 °C.

The heat treatment according to optional step d) of the method according to the invention can also be performed in a number of stages and/or steps.

The lightweight metal workpiece obtained in step c) is preferably subjected to a heat treatment in a temperature range of from 80 to 470 °C.

In one embodiment of the present invention, the heat treatment according to optional step d) is performed in a two-stage process. By way of example, the first step of the heat treatment can be performed in a temperature range of from 100 to 500 °C, for example in a temperature range from 100 to 470 °C, for a period of from 10 min to 2 h and the second step of the heat treatment can be performed in a temperature range of from 80 to 160 °C for a period of from 10 min to 50 h.

By way of example, the heat treatment can be performed in air, shielding gas, or in a vacuum. By way of example, the heat treatment according to optional step d) of the method according to the invention is performed in shielding gas, such as nitrogen or argon, at temperatures between 80 and 500 °C, for example at temperatures between 80 and 470 °C, for a period of from 10 min to 52 h.

In one embodiment of the present invention, the heat treatment according to optional step d) of the method according to the invention is performed directly after step c), i.e. the heat treatment according to step d) of the method according to the invention is carried out directly with the lightweight metal workpiece obtained in step c). In other words, if a heat treatment according to step d) is carried out, the method according to the invention is preferably carried out without one or more further method steps between the method steps c) and d). Alternatively, the optional heat treatment according to step d) of the method according to the invention is performed after step c), but at a later moment in time, i.e. the heat treatment according to step d) of the method according to the invention is carried out with the lightweight metal workpiece obtained in step c), but not immediately after step c). In other words, the method according to the invention is carried out without one or more further method steps between the method steps c) and d).

In one embodiment of the present invention, the heat-treated lightweight metal workpiece obtained in step d) can be subjected to a further cooling.

By way of example, the heat-treated lightweight metal workpiece obtained in step d) is cooled to room temperature. In one embodiment, the heat-treated lightweight metal workpiece obtained in step d) is cooled to room temperature in one step. Alternatively, the heat-treated lightweight metal workpiece obtained in step d) is cooled to room temperature in a number of steps. By way of example, the heat-treated lightweight metal workpiece obtained in step d) is cooled to a defined temperature below the heat treatment temperature in step d), followed by a cooling in the open air to room temperature.

In one embodiment of the present invention, the heat-treated lightweight metal workpiece obtained in step d) is cooled to room temperature with a cooling rate which is ≥10 K/sec, and preferably ≥10 to 20 K/sec. By way of example, the heat-treated lightweight metal workpiece is cooled to room temperature with a cooling rate in a range of ≥20 K/sec or in a range from 20 K/sec to 1000 K/sec.

Such methods for cooling heat-treated lightweight metal workpieces are known in the prior art. By way of example, the heat-treated lightweight metal workpiece can be cooled in a defined manner to room temperature with the aid of cooling in moving air or by quenching in water

Alternatively, the heat-treated lightweight metal workpiece obtained in step d) is cooled to room temperature in the open air.

The present invention also relates to a method for producing a lightweight metal workpiece, in particular a high-strength lightweight metal workpiece, by means of spraying methods. The lightweight metal workpiece is preferably produced by a method as described hereinafter.

The method according to the invention for producing the lightweight metal workpiece, in particular the high-strength lightweight metal workpiece, comprises at least the following steps:
a) providing an aluminum alloy,
b) producing a lightweight metal workpiece comprising the aluminum alloy from step a) by means of spraying methods, and
c) cooling the lightweight metal workpiece obtained in step b) to ≤80 °C with a solidification rate that is ≤10,000,000 K/sec.

By way of example, the method for producing the lightweight metal workpiece comprises a further step d) of subjecting the lightweight metal workpiece from step c) to a heat treatment in a temperature range of from 80 to 500 °C.

In one embodiment the method for producing the lightweight metal workpiece, in particular the high-strength lightweight metal workpiece, consists of the following steps:
a) providing an aluminum alloy,
b) producing a lightweight metal workpiece comprising the aluminum alloy from step a) by means of spraying methods,
c) cooling the lightweight metal workpiece obtained in step b) to ≤80 °C with a solidification rate that is ≤10,000,000 K/sec, and
d) optionally subjecting the lightweight metal workpiece from step c) to a heat treatment in a temperature range of from 80 to 500 °C.

With regard to steps a), b), c) and optional step d), reference is made to the above definitions in respect of the aluminum alloy, the method for producing a lightweight metal workpiece by means of additive layer manufacturing, and embodiments thereof.

Methods for producing lightweight metal workpieces by means of spraying methods are known in the prior art. By way of example, the lightweight metal workpiece can be produced via cold gas, atmospheric plasma, HVOF, and flame spraying.

On account of the advantages provided by the lightweight metal workpiece according to the invention, the present invention also relates to a lightweight metal workpiece, in particular a high-strength lightweight metal workpiece, comprising the aluminum alloy. By way of example, the lightweight metal workpiece, in particular the high-strength lightweight metal workpiece, consists of the aluminum alloy.

The present invention is also directed to the use of the aluminum alloy for producing high-strength lightweight metal workpieces by means of additive layer manufacturing (ALM) and/or spraying methods.

A further aspect of the present invention also relates to the use of the aluminum alloy for structural components, in particular in automobile manufacturing or in aviation and aerospace applications, plant engineering, medical technology, or as coating material for structural components.

As mentioned above, the aluminum alloy according to the invention offers the advantage that it can be integrated directly in the production process in local or integral component part manufacture. A further advantage is the fact that complex thermo-mechanical treatments can be avoided by means of the aluminum alloy according to the invention, and therefore further costly and time-consuming process steps can be saved. A further advantage is the fact that the aluminum alloy according to the invention enables a heat treatment without material damage and/or thermal stresses/warping. A further advantage is the fact that, on account of the use of the aluminum alloy according to the invention, it is possible to dispense with complex component part levelling and also to increase the component part reproducibility and economic efficiency. A further advantage is in particular the fact that the aluminum alloy according to the invention is suitable for producing high-strength lightweight metal workpieces, in particular by ALM process technologies and/or spraying methods.

## Claims

1. An aluminum alloy consisting of
4.0 to 10.0 % by weight, in relation to the total weight of the alloy, of zinc (Zn),
1.0 to 3.5 % by weight, in relation to the total weight of the alloy, of magnesium (Mg),
0,001 to 0.5 % by weight, in relation to the total weight of the alloy, of at least one element selected from the group consisting of zirconium (Zr), hafnium (Hf), molybdenum (Mo), terbium (Tb), niobium (Nb), gadolinium (Gd), erbium (Er), and vanadium (V),
0 to < 2.5 % by weight, in relation to the total weight of the alloy, of copper (Cu),
0 to < 0.4 % by weight, in relation to the total weight of the alloy, of silicon (Si),
0 to < 0.5 % by weight, in relation to the total weight of the alloy, of iron (Fe),
0 to 0.5 % by weight, in relation to the total weight of the alloy, of manganese (Mn),
0 to 0.3 % by weight, in relation to the total weight of the alloy, of chromium (Cr),
0 to 0.2 % by weight, in relation to the total weight of the alloy, of titanium (Ti),
0.02 to 1.25 % by weight, in relation to the total weight of the alloy, of scandium (Sc),
the rest being aluminum with further impurities individually of at most 0.1 % by weight in relation to the total weight of the alloy, and on the whole at most 0.5 % by weight, in relation to the total weight of the alloy,
wherein if the aluminum alloy contains zirconium (Zr) the amount of zirconium (Zr) corresponds to at most 1/4 of the amount of scandium (Sc).

2. The aluminum alloy according to claim 1, wherein the alloy contains 4.0 to 8.0 % by weight, in particular 4.1 to 8.0 % by weight, in relation to the total weight of the alloy, of zinc (Zn) and/or 1.1 to 3.0 % by weight, in relation to the total weight of the alloy, of magnesium (Mg).

3. The aluminum alloy according to either one of claims 1 or 2, wherein the alloy contains 0.01 to 0.2 % by weight, in particular 0.03 to 0.15 % by weight, in relation to the total weight of the alloy, of titanium (Ti) and/or 0.02 to 0.75 % by weight, in particular 0.05 to 0.7 % by weight, in relation to the total weight of the alloy, of scandium (Sc).

4. The aluminum alloy according to any one of claims 1 to 3, wherein the alloy contains 0.01 to 2.0 % by weight, in particular 0.05 to 1.5 % by weight, in relation to the total weight of the alloy, of copper (Cu) and/or 0.01 to 0.5 % by weight, in particular 0.05 to 0.4 % by weight, in relation to the total weight of the alloy, of manganese (Mn), and/or 0.01 to 0.2 % by weight, in particular 0.02 to 0.15 % by weight, in relation to the total weight of the alloy, of chromium (Cr).

5. The aluminum alloy according to any one of claims 1 to 4, wherein the alloy contains magnesium (Mg) in an amount such that the ratio by weight of zinc (Zn) to Magnesium (Mg) [wt(Zn)/wt(Mg)] is from 2:1 to 3:1.

6. The aluminum alloy according to any one of claims 1 to 5, wherein the amount of hafnium (Hf) and/or terbium (Tb) corresponds individually to at most ¼ of the amount of scandium (Sc).

7. The aluminum alloy according to any one of claims 1 to 6, wherein the alloy is provided in the form of a powder, in particular in the form of a powder comprising particles having an average particle size *d₅₀* of ≤100 µm, preferably 20 to 70 µm.

8. A method for producing a lightweight metal workpiece, said method comprising the following steps
a) providing an aluminum alloy according to any one of claims 1 to 7,
b) producing a lightweight metal workpiece comprising the aluminum alloy from step a) by means of additive layer manufacturing (ALM) and/or spraying methods,
c) cooling the lightweight metal workpiece obtained in step b) to ≤80 °C with a solidification rate that is ≤10,000,000 K/sec.

9. The method according to claim 8, wherein the method comprises a further step d) of subjecting the lightweight metal workpiece from step c) to a heat treatment in a temperature range of from 80 to 500 °C.

10. A lightweight metal workpiece comprising the aluminum alloy according to any one of claims 1 to 7.

11. Use of the aluminum alloy according to any one of claims 1 to 7 for producing high-strength lightweight metal workpieces by means of additive layer manufacturing (ALM) and/or spraying methods.

12. Use of the aluminum alloy according to any one of claims 1 to 7 for structural components, in particular in automobile manufacturing or in aviation and aerospace applications, plant engineering, medical technology, or as coating material for structural components.

## Patentansprüche

1. Aluminiumlegierung, bestehend aus:
4,0 bis 10,0 Gew.-% Zink (Zn), bezogen auf das Gesamtgewicht der Legierung,
1,0 bis 3,5 Gew.-% Magnesium (Mg), bezogen auf das Gesamtgewicht der Legierung,
0,001 bis 0,5 Gew.-% von mindestens einem Element ausgewählt aus der Gruppe bestehend aus Zirconium (Zr), Hafnium (Hf), Molybdän (Mo), Terbium (Tb), Niob (Nb), Gadolinium (Gd), Erbium (Er) und Vanadium (V), bezogen auf das Gesamtgewicht der Legierung,
0 bis < 2,5 Gew.-% Kupfer (Cu), bezogen auf das Gesamtgewicht der Legierung,
0 bis < 0,4 Gew.-% Silicium (Si), bezogen auf das Gesamtgewicht der Legierung,
0 bis < 0,5 Gew.-% Eisen (Fe), bezogen auf das Gesamtgewicht der Legierung,
0 bis 0,5 Gew.-% Mangan (Mn), bezogen auf das Gesamtgewicht der Legierung,
0 bis 0,3 Gew.-% Chrom (Cr), bezogen auf das Gesamtgewicht der Legierung,
0 bis 0,2 Gew.-% Titan (Ti), bezogen auf das Gesamtgewicht der Legierung,
0,02 bis 1,25 Gew.-% Scandium (Sc), bezogen auf das Gesamtgewicht der Legierung,
wobei der Rest Aluminium mit weiteren Verunreinigungen ist, die individuell höchstens 0,1 Gew.-%, bezogen auf das Gesamtgewicht der Legierung, und insgesamt höchstens 0,5 Gew.-% stellen, bezogen auf das Gesamtgewicht der Legierung,
wobei, falls die Aluminiumlegierung Zirconium (Zr) enthält, die Menge an Zirconium (Zr) höchstens 1/4 der Menge an Scandium (Sc) entspricht.

2. Aluminiumlegierung nach Anspruch 1, wobei die Legierung 4,0 bis 8,0 Gew.-%, insbesondere 4,1 bis 8,0 Gew.-%, bezogen auf das Gesamtgewicht der Legierung, an Zink (Zn) und/oder 1,1 bis 3,0 Gew.-%, bezogen auf das Gesamtgewicht der Legierung, an Magnesium (Mg) enthält.

3. Aluminiumlegierung nach einem der Ansprüche 1 oder 2, wobei die Legierung 0,01 bis 0,2 Gew.-%, insbesondere 0,03 bis 0,15 Gew.-%, bezogen auf das Gesamtgewicht der Legierung, an Titan (Ti) und/oder 0,02 bis 0,75 Gew.-%, insbesondere 0,05 bis 0,7 Gew.-%, bezogen auf das Gesamtgewicht der Legierung, an Scandium (Sc) enthält.

4. Aluminiumlegierung nach einem der Ansprüche 1 bis 3, wobei die Legierung 0,01 bis 2,0 Gew.-%, insbesondere 0,05 bis 1,5 Gew.-%, bezogen auf das Gesamtgewicht der Legierung, an Kupfer (Cu) und/oder 0,01 bis 0,5 Gew.-%, insbesondere 0,05 bis 0,4 Gew.-%, bezogen auf das Gesamtgewicht der Legierung, an Mangan (Mn) und/oder 0,01 bis 0,2 Gew.-%, insbesondere 0,02 bis 0,15 Gew.-%, bezogen auf das Gesamtgewicht der Legierung, an Chrom (Cr) enthält.

5. Aluminiumlegierung nach einem der Ansprüche 1 bis 4, wobei die Legierung Magnesium (Mg) in einer solchen Menge enthält, dass das Gewichtsverhältnis von Zink (Zn) zu Magnesium (Mg) [(Gew.(Zn)/Gew.(Mg)] 2:1 bis 3:1 beträgt.

6. Aluminiumlegierung nach einem der Ansprüche 1 bis 5, wobei die Menge an Hafnium (Hf) und/oder Terbium (Tb) individuell höchstens 1/4 der Menge an Scandium (Sc) entspricht.

7. Aluminiumlegierung nach einem der Ansprüche 1 bis 6, wobei die Legierung in Form von Pulver bereitgestellt wird, insbesondere in Form von Pulver, das Partikel mit einer durchschnittlichen Partikelgröße dso von ≤100 µm, vorzugsweise 20 bis 70 µm umfasst.

8. Verfahren zum Produzieren eines leichtgewichtigen Metallwerkstücks, wobei das Verfahren die folgenden Schritte umfasst:
a) Bereitstellen einer Aluminiumlegierung gemäß einem der Ansprüche 1 bis 7,
b) Produzieren eines leichtgewichtigen Metallwerkstücks, das die Aluminiumlegierung aus Schritt a) umfasst, mittels additivem Fertigungsverfahren in Schichten (ALM) und/oder Sprühverfahren,
c) Kühlen des in Schritt b) erhaltenen leichtgewichtigen Metallwerkstücks auf ≤80 °C mit einer Verfestigungsrate, die ≤ 10.000.000 K/s beträgt.

9. Verfahren nach Anspruch 8, wobei das Verfahren einen weiteren Schritt d) umfasst, in dem das leichtgewichtige Metallwerkstück aus Schritt c) einer Wärmebehandlung in einem Temperaturbereich von 80 bis 500 °C unterzogen wird.

10. Leichtgewichtiges Metallwerkstück, umfassend die Aluminiumlegierung gemäß einem der Ansprüche 1 bis 7.

11. Verwendung der Aluminiumlegierung gemäß einem der Ansprüche 1 bis 7 zum Produzieren hochfester leichtgewichtiger Metallwerkstücke mittels additivem Fertigungsverfahren in Schichten (ALM) und/oder Sprühverfahren.

12. Verwendung der Aluminiumlegierung gemäß einem der Ansprüche 1 bis 7 für Strukturkomponenten, insbesondere in der Automobilherstellung oder in Luft- und Raumfahrtanwendungen, Anlagenbau, Medizintechnologie oder als Beschichtungsmaterial für Strukturkomponenten.

## Revendications

1. Alliage d'aluminium constitué de
4,0 à 10,0 % en poids, par rapport au poids total de l'alliage, de zinc (Zn),
1,0 à 3,5 % en poids, par rapport au poids total de l'alliage, de magnésium (Mg),
0,001 à 0,5 % en poids, par rapport au poids total de l'alliage, d'au moins un élément choisi dans le groupe constitué par le zirconium (Zr), le hafnium (Hf), le molybdène (Mo), le terbium (Tb), le niobium (Nb), le gadolinium (Gd), l'erbium (Er) et le vanadium (V),
0 à < 2,5 % en poids, par rapport au poids total de l'alliage, de cuivre (Cu),
0 à < 0,4 % en poids, par rapport au poids total de l'alliage, de silicium (Si),
0 à < 0,5 % en poids, par rapport au poids total de l'alliage, de fer (Fe),
0 à 0,5 % en poids, par rapport au poids total de l'alliage, de manganèse (Mn),
0 à 0,3 % en poids, par rapport au poids total de l'alliage, de chrome (Cr),
0 à 0,2 % en poids, par rapport au poids total de l'alliage, de titane (Ti),
0,02 à 1,25 % en poids, par rapport au poids total de l'alliage, de scandium (Sc),
le reste étant de l'aluminium comprenant en outre des impuretés à hauteur individuellement d'au maximum 0,1 % en poids par rapport au poids total de l'alliage et dans l'ensemble d'au maximum 0,5 % en poids, par rapport au poids total de l'alliage,
si l'alliage aluminium contient du zirconium (Zr) la quantité de zirconium (Zr) correspondant au maximum à 1/4 de la quantité de scandium (Sc).

2. Alliage d'aluminium selon la revendication 1, l'alliage contenant 4,0 à 8,0 % en poids, en particulier, 4,1 à 8,0 % en poids, par rapport au poids total de l'alliage, de zinc (Zn) et/ou 1,1 à 3,0 % en poids, par rapport au poids total de l'alliage, de magnésium (Mg).

3. Alliage d'aluminium selon l'une ou l'autre des revendications 1 ou 2, l'alliage contenant 0,01 à 0,2 % en poids, en particulier, 0,03 à 0,15 % en poids, par rapport au poids total de l'alliage, de titane (Ti) et/ou 0,02 à 0,75 % en poids, en particulier 0,05 à 0,7 % en poids, par rapport au poids total de l'alliage, de scandium (Sc).

4. Alliage d'aluminium selon l'une quelconque des revendications 1 à 3, l'alliage contenant 0,01 à 2,0 % en poids, en particulier, 0,05 à 1,5 % en poids, par rapport au poids total de l'alliage, de cuivre (Cu) et/ou 0,01 à 0,5 % en poids, en particulier 0,05 à 0,4 % en poids, par rapport au poids total de l'alliage, de manganèse (Mn) et/ou 0,01 à 0,2 % en poids, en particulier 0,02 à 0,15 % en poids, par rapport au poids total de l'alliage, de chrome (Cr).

5. Alliage d'aluminium selon l'une quelconque des revendications 1 à 4, l'alliage contenant du magnésium (Mg) en une quantité telle que le rapport en poids du zinc (Zn) au magnésium (Mg) [pds de Zn/pds de Mg] est de 2:1 à 3:1.

6. Alliage d'aluminium selon l'une quelconque des revendications 1 à 5, dans lequel la quantité de hafnium (Hf) et/ou de terbium (Tb) correspond individuellement au maximum à 1/4 de la quantité de scandium (Sc).

7. Alliage d'aluminium selon l'une quelconque des revendications 1 à 6, l'alliage étant fourni sous la forme d'une poudre, en particulier sous la forme d'une poudre comprenant des particules ayant une taille moyenne de particule *d₅₀* ≤ 100 µm, de préférence de 20 à 70 µm.

8. Procédé pour la production d'une pièce métallique légère, ledit procédé comprenant les étapes suivantes
a) la fourniture d'un alliage d'aluminium selon l'une quelconque des revendications 1 à 7,
b) la production d'une pièce métallique légère comprenant l'alliage d'aluminium provenant de l'étape a) au moyen de procédés de fabrication additive par couches (ALM) et/ou de pulvérisation,
c) le refroidissement de la pièce métallique légère obtenue dans l'étape b) à ≤ 80 °C avec une vitesse de solidification qui est ≤ 10 000 000 K/s.

9. Procédé selon la revendication 8, le procédé comprenant une étape supplémentaire d) consistant à soumettre la pièce métallique légère provenant de l'étape c) à un traitement thermique dans une plage de température de 80 à 500 °C.

10. Pièce métallique légère comprenant l'alliage d'aluminium selon l'une quelconque des revendications 1 à 7.

11. Utilisation de l'alliage aluminium selon l'une quelconque des revendications 1 à 7 pour la production de pièces métalliques légères à haute résistance au moyen de procédés de fabrication additive par couches (ALM) et/ou de pulvérisation.

12. Utilisation de l'alliage aluminium selon l'une quelconque des revendications 1 à 7 pour des éléments de structure, en particulier en fabrication d'automobiles ou dans des applications dans l'aviation ou l'aérospatial, l'organisation d'installations industrielles, la technologie médicale ou en tant que matière de revêtement pour des éléments de structure.
